# EUROPÄISCHE PATENTSCHRIFT

(11) **EP 3 143 274 B1**
(45) Veröffentlichungstag und Bekanntmachung des Hinweises auf die Patenterteilung: **28.02.2018**
(21) Anmeldenummer: 15718463.1
(22) Anmeldetag: 10.04.2015
(51) Int. Cl.: F02M 55/00, F16J 15/04, F16J 15/08

(54) **KRAFTSTOFFZULEITUNGSEINRICHTUNG AN EINEM KRAFTSTOFFINJEKTOR UND KRAFTSTOFFINJEKTOR**
FUEL SUPPLY ARRANGEMENT FOR A FUEL INJECTOR AND FUEL INJECTOR
ARRANGEMENT D'ALIMENTATION EN COMBUSTIBLE POUR UN INJECTEUR DE CARBURANT ET INJECTEUR DE CARBURANT

(30) Priorität: 15.05.2014 DE 102014209182
(43) Veröffentlichungstag der Anmeldung: 22.03.2017
(73) Patentinhaber: Robert Bosch GmbH, 70442 Stuttgart (DE)
(72) Erfinder: LEISER, Stefan, 70188 Stuttgart (DE); LALIC, Hrvoje, 71636 Ludwigsburg (DE)
(86) Internationale Anmeldenummer: PCT/EP2015/057875
(87) Internationale Veröffentlichungsnummer: WO 2015/172950

(56) Entgegenhaltungen:
- DE-A1- 19 600 403
- DE-A1- 19 753 518
- DE-A1-102004 024 389
- DE-U1- 20 318 931

## Beschreibung

### Stand der Technik

Die Erfindung betrifft eine Kraftstoffzuleitungseinrichtung an einem Kraftstoffinjektor nach dem Oberbegriff des Anspruchs 1. Ferner betrifft die Erfindung einen Kraftstoffinjektor mit einer erfindungsgemäßen Kraftstoffzuleitungseinrichtung.

Eine Kraftstoffzuleitungseinrichtung nach dem Oberbegriff des Anspruchs 1 ist aus der DE 102 49 142 A1 der Anmelderin bekannt. Die Problematik bei derartigen Kraftstoffzuleitungseinrichtungen besteht darin, im montierten Zustand des Kraftstoffinjektors zwischen dem Injektorgehäuse und dem Kraftstoffstutzen des Kraftstoffinjektors die benötigte Dichtheit herzustellen, damit der über den Druckstutzen in das Injektorgehäuse einströmende Kraftstoff, der einen Druck von mehr als 2000 bar aufweisen kann, nicht aus dem Verbindungsbereich zwischen dem Druckstutzen und dem Injektorgehäuse austritt. Dazu findet bei der DE 102 49 142 A1 ein ebener Dichtungsring als Dichtelement Verwendung, der durch eine spezielle Formgebung des Dichtungsrings sowie des Druckstutzens mit dem Druckstutzen verbunden ist. Die so gebildete Baueinheit ermöglicht es, bei der Montage des Druckstutzens das Dichtelement bzw. die Dichtungsscheibe in einer gewünschten Soll-Position (zentrisch zur Längsache des Druckstutzens) zu positionieren, sodass sichergestellt ist, dass die Dichtungsscheibe im Endzustand ebenfalls ihre Soll-Position einnimmt. Die bekannte Kraftstoffzuleitungseinrichtung ist durch die spezielle Ausbildung des Druckstutzens sowie der Dichtungsscheibe und des zusätzlichen Montageschritts zum Verbinden des Druckstutzens mit der Dichtungsscheibe relativ komplex und kostenintensiv ausgebildet.

Darüber hinaus ist aus der DE 197 53 518 A1 der Anmelderin eine weitere Kraftstoffzuleitungseinrichtung nach dem Oberbegriff des Anspruchs 1 bekannt, welche speziell geformte Dichtungselemente vorsieht, die einerseits die benötigte Dichtheit und andererseits die benötigte Positionierung des Dichtelements in der Aufnahme des Kraftstoffinjektors sicherstellen sollen. Die aus der DE 197 53 518 A1 bekannten Dichtungselemente sind relativ aufwändig ausgebildet und benötigen darüber hinaus ggf. ebenfalls speziell geformte Druckstutzen.

### Offenbarung der Erfindung

Ausgehend von dem dargestellten Stand der Technik liegt der Erfindung die Aufgabe zugrunde, eine Kraftstoffzuleitungseinrichtung an einem Kraftstoffinjektor nach dem Oberbegriff des Anspruchs 1 derart weiterzubilden, dass insbesondere die zwischenzeitlich gesteigerten Dichtheitsanforderungen an die Verbindung, hervorgerufen durch die zum Teil mehr als 2000bar betragenden Systemdrücke, sicher erfüllt werden. Gleichzeitig soll eine möglichst einfache und somit kostengünstige Fertigung des Druckstutzens sowie des Injektorgehäuses im Bereich der Verbindung mit dem Druckstutzen ermöglicht werden.

Diese Aufgabe wird erfindungsgemäß bei einer Kraftstoffzuleitungseinrichtung mit den Merkmalen des Anspruchs 1 dadurch gelöst, dass das Dichtelement als Dichtungsscheibe mit in radialer Richtung gewellter Form ausgebildet ist. Ein derartiges Dichtelement, das ggf. sogar als Standard- bzw. Normteil verfügbar ist, löst in überraschender Art und Weise die Problematik hinsichtlich der benötigten Dichtheit und ermöglicht es darüber hinaus, den Druckstutzen bzw. das Injektorgehäuse im Verbindungsbereich besonders einfach und somit kostengünstig auszubilden. In der Praxis hat es sich herausgestellt, dass bei den üblichen Einschraubkräften des Druckstutzens in die Aufnahme des Injektorgehäuses eine Dichtigkeit des Verbunds bis zu einem Druck von ca. 4000 bar sichergestellt werden kann. Unter "gewellter Form" im Sinne der Erfindung soll dabei nicht nur eine im Querschnitt mit Radien versehene Form verstanden werden, sondern auch im Querschnitt beispielsweise trapez- oder dreieckförmige Profile des Dichtelements.

Weiter ist zur einfachen Erkennung der axialen Endposition des Druckstutzens in der Aufnahme des Injektorgehäuses und damit gewährleistet ist, dass das Dichtelement seine Dichtfunktion erfüllt, erfindungsgemäß vorgesehen, dass zwischen dem Innendurchmesser der Aufnahme im Injektorgehäuse und dem Außendurchmesser des Dichtelements im Montagezustand ein radiales Spiel bzw. ein radialer Spalt ausgebildet ist, und dass im Einbauzustand des Druckstutzens in der Aufnahme, bei der dieser seine axiale Endposition einnimmt, das radiale Spiel zumindest bereichsweise Null ist.

Dabei macht sich die Erfindung die Überlegung zunutze, dass die üblicherweise zwischen dem Druckstutzen und dem Injektorgehäuse zum Festlegen des Druckstutzens in dem Injektorgehäuse ausgebildete Gewindeverbindung beim maschinellen Einschrauben des Druckstutzens prozesstechnisch relativ leicht überwacht werden kann. Die axiale Endposition des Druckstutzens in der Aufnahme lässt sich nun dadurch detektieren, dass bei der Deformation des Dichtelements sich dieses in radialer Richtung ausweitet und nach Überwindung des radialen Spiels in der Aufnahme im Injektorgehäuse zumindest bereichsweise an der inneren Umfangswand der Aufnahme anliegt. Dieses Anliegen führt zu einer steilen Zunahme des benötigten Drehmoments zum weiteren Drehen des Druckstutzens in der Gewindeverbindung, sodass beim Detektieren der angesprochenen Drehmomentzunahme auf das Erreichen der axialen Endposition des Druckstutzens in der Aufnahme des Injektorgehäuses geschlossen werden kann. Zusätzlich kommt es beim axialen Verpressen des Dichtelements zu einem starken Anstieg des benötigten Drehmoments zum Einschrauben des Druckstutzens, sobald das Dichtelement vollständig axial verpresst ist, d.h. keine Wellenform mehr aufweist und auf Block geht.

Vorteilhafte Weiterbildungen der erfindungsgemäßen Kraftstoffzuleitungseinrichtung sind in den Unteransprüchen aufgeführt.

In konstruktiv bevorzugter Ausgestaltung des Dichtelements weist dessen Querschnitt mehrere wellenförmige Abschnitte und zwei, in einer Symmetrieebene der Dichtungsscheibe angeordneten, radial innen und außen umlaufende, ebene Bereiche auf. Insbesondere durch das Vorsehen mehrerer wellenförmiger Abschnitte wird eine parallele Anlage der Dichtungsscheibe zwischen den zugewandten Flächen des Druckstutzens sowie der Aufnahme im Injektorgehäuse ermöglicht und es werden gleichzeitig mehrere, radial umlaufende Dichtbereiche geschaffen. Dadurch können insbesondere ggf. auftretende Unebenheiten bzw. Rauigkeiten der Oberflächen, die ggf. lokal an einer Stelle zu einer Undichtigkeit führen, durch einen radial weiter innen bzw. weiter außen liegenden Dichtungsbereich egalisiert bzw. kompensiert werden.

Zur Erzeugung der für die Dichtheit erforderlichen Deformation bzw. der flächigen Anlage des Dichtelements an den zugewandten Stirnflächen des Druckstutzens und des Injektorgehäuses ist es besonders bevorzugt vorgesehen, dass das Dichtelement aus einem leicht deformierbaren Material, insbesondere aus Stahl, besteht.

Eine besonders einfache Fertigung des Druckstutzens sowie des Injektorgehäuses im Bereich der Aufnahme für den Druckstutzen lässt sich erzielen, wenn der Grund der Aufnahme und die Stirnseite des Druckstutzens, ggf. mit Ausnahme des jeweils radial äußeren Bereichs, eben ausgebildet sind.

In Weiterbildung des zuletzt genannten Gedankens wird es vorgeschlagen, dass die Oberfläche des Grunds der Aufnahme und/oder die Stirnseite des Druckstutzens durch einen spanenden Fertigungsschritt, insbesondere durch Drehen, ausgebildet sind/ist. Mit anderen Worten gesagt bedeutet dies, dass durch die Verwendung des erfindungsgemäßen Dichtelements keine aufwändige Fertigung der Dichtflächen an dem Druckstutzen bzw. der Aufnahme erforderlich ist. Vielmehr können diese durch relativ einfache und preiswerte Herstellverfahren, insbesondere durch Drehen, mit der gewünschten Rauheit ausgebildet werden. In der Praxis hat es sich erwiesen, dass es genügt, die entsprechenden Oberflächen einer Rauheit von R_{zmax5} oder R_{zmax10} auszubilden.

In Abwandlung dieses Erfindungsgedankens ist es vorgesehen, dass der Grund der Aufnahme eine radial umlaufende Schräge aufweist, dass das Dichtelement im Montagezustand mit seinem Umfang an der Schräge anliegt, und dass im Einbauzustand des Druckstutzens in der Aufnahme, bei der dieser seine axiale Endposition einnimmt, der Umfang des Dichtelements an der Umfangswand der Aufnahme außerhalb der Schräge zumindest bereichsweise anliegt. Diese Lösung hat zusätzlich zur zuletzt erläuterten Lösung den Vorteil, dass sich das Dichtungselement im Montagezustand aufgrund der Anlage an der Schräge der Aufnahme selbst zentriert, sodass sichergestellt ist, dass das Dichtungselement in seiner Soll-Position in der Aufnahme positioniert ist.

Die Erfindung umfasst auch einen Kraftstoffinjektor mit einer erfindungsgemäßen Kraftstoffzuleitungseinrichtung. Ein derartiger Kraftstoffinjektor hat die Eigenschaft, bei relativ preiswerter und einfacher Herstellbarkeit im Verbindungsbereich des Druckstutzens mit dem Injektorgehäuse für sehr hohe Drücke verwendbar zu sein.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Kraftstoffinjektor im Verbindungsbereich zwischen einem Injektorgehäuse und einem Druckstutzen in einem vereinfachten Längsschnitt,
- Fig. 2: einen Ausschnitt aus der Fig. 1 in vergrößerter Darstellung zu Beginn der Montage des Druckstutzens in der Aufnahme des Injektorgehäuses und
- Fig. 3: den Bereich gemäß Fig. 2 am Ende des Montagevorgangs des Druckstutzens in der Aufnahme des Injektorgehäuses.

Gleiche Elemente bzw. Elemente mit gleicher Funktion sind in den Figuren mit den gleichen Bezugsziffern versehen.

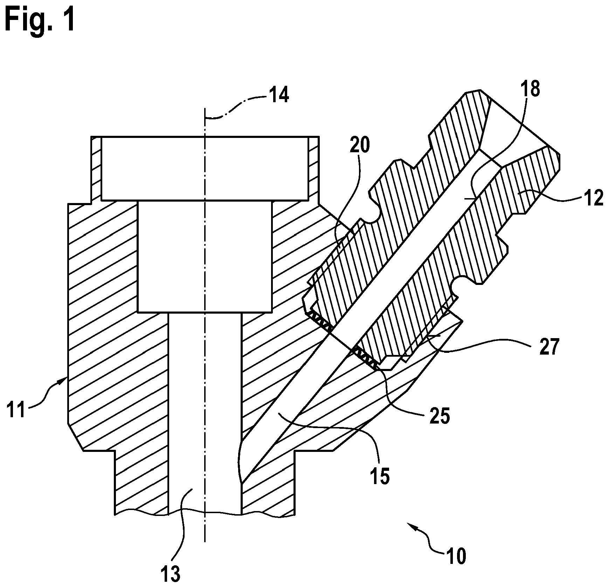

In den Fig. 1 bis 3 ist ein erfindungsgemäßer Verbindungsbereich zwischen einem Injektorgehäuse 11 eines Kraftstoffinjektors 10 und einem Druckstutzen 12 dargestellt. Bei dem Kraftstoffinjektor 10 handelt es sich insbesondere um einen sogenannten Common-Rail-Injektor, der dazu ausgebildet ist, bei Systemdrücken von über 2000 bar den Brennraum einer nicht dargestellten Brennkraftmaschine mit Kraftstoff zu versorgen. Hierzu weist das Injektorgehäuse 11, das aus Stahl besteht, einen bereichsweise dargestellten Hochdruckraum 13 auf, in dem eine nicht dargestellte Düsennadel hubbeweglich angeordnet ist. Durch Steuerung der Hubbewegung der Düsennadel wird in gewünschter Art und Weise das Abgeben des Kraftstoffs über wenigstens eine am Injektorgehäuse 11 ausgebildete Einspritzöffnung in den Brennraum bewirkt. Der Hochdruckraum 13 wird über einen in Bezug zu einer Längsachse 14 des Injektorgehäuses 11 schräg angeordneten Versorgungskanal 15 mit unter Hochdruck (Systemdruck) stehenden Kraftstoff versorgt. Hierzu weist das Injektorgehäuse 11 eine sacklochförmige Aufnahme 17 zur Aufnahme des Druckstutzens 12 auf. Der Druckstutzen 12 weist eine mit dem Versorgungskanal 15 und zur Längsrichtung des Druckstutzens 12 beispielhaft fluchtend angeordnete Durchgangsbohrung 18 auf. Der Druckstutzen 12 ist wiederum über eine nicht dargestellte Versorgungsleitung mit einem Kraftstoffspeicher (Rail) hydraulisch verbunden.

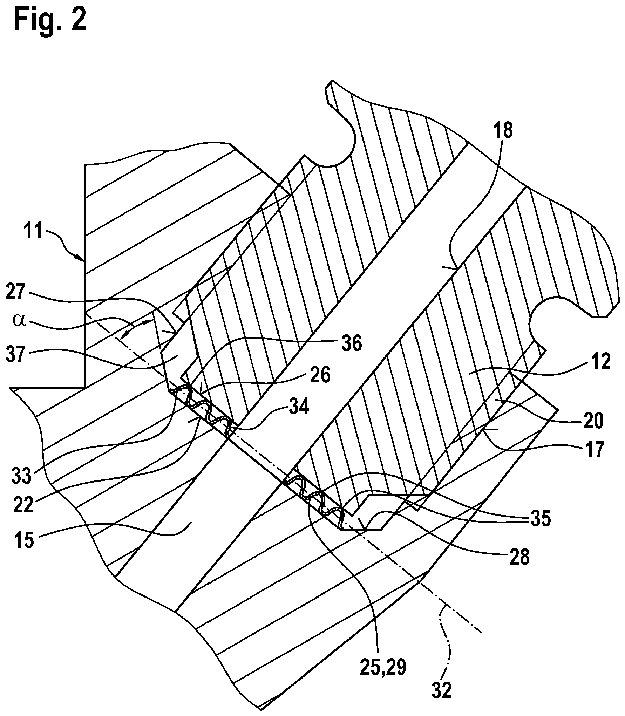

Die Verbindung zwischen dem Druckstutzen 12 und dem Injektorgehäuse 11 erfolgt über eine Gewindeverbindung 20, wozu der Druckstutzen 12 in einem Teilbereich seiner Länge ein entsprechendes Außengewinde und die Aufnahme 17 ein entsprechendes Innengewinde aufweist. Wie insbesondere anhand der Darstellung der Fig. 2 erkennbar ist, ist zwischen dem Grund 22 der Aufnahme 17 und dem Druckstutzen 12 ein Dichtelement 25 angeordnet. Sowohl der Grund 22 der Aufnahme 17 als auch die dem Dichtelement 25 zugewandte Stirnseite 26 des Druckstutzens 12 sind bevorzugt eben ausgebildet und durch einen spanenden Herstellungsprozess, insbesondere durch Drehen, ausgebildet. Die Aufnahme 17 weist darüber hinaus im Übergangsbereich vom Grund 22 zu der senkrecht umlaufenden Umfangswand 27 eine Schräge 28 auf, die beispielsweise unter einem Winkel α von 45° zum (ebenen) Grund 22 der Aufnahme 17 angeordnet ist.

Das aus einem leicht deformierbaren Material, insbesondere aus Stahl bestehende Dichtelement 25 weist eine geringere Härte auf als das Material des Injektorgehäuses 11 bzw. des Druckstutzens 12. Wie insbesondere anhand der Darstellung der Fig. 2 erkennbar ist, ist das Dichtelement 25 als Dichtungsscheibe 29 mit einer Öffnung 30 ausgebildet, die mit der Versorgungsbohrung 15 bzw. der Durchgangsbohrung 18 fluchtet. Die Dichtungsscheibe 29 weist eine Symmetrieebene 32 auf. Sowohl der radial umlaufende äußere Bereich 33, als auch der radial umlaufende innere Bereich 34 der Dichtungsscheibe 29 sind jeweils eben ausgebildet und fluchtend zur Symmetrieebene 32 angeordnet. Zwischen den beiden Bereichen 33, 34 sind mehrere, wellenförmige Abschnitte 35 angeordnet, die gerundet ausgebildete Kuppen 36 ausbilden. Die Abschnitte 35 und die Kuppen 36 sind jeweils radial umlaufend um die Öffnung 30 ausgebildet, wobei im dargestellten Ausführungsbeispiel insgesamt fünf Kuppen 36 vorgesehen sind.

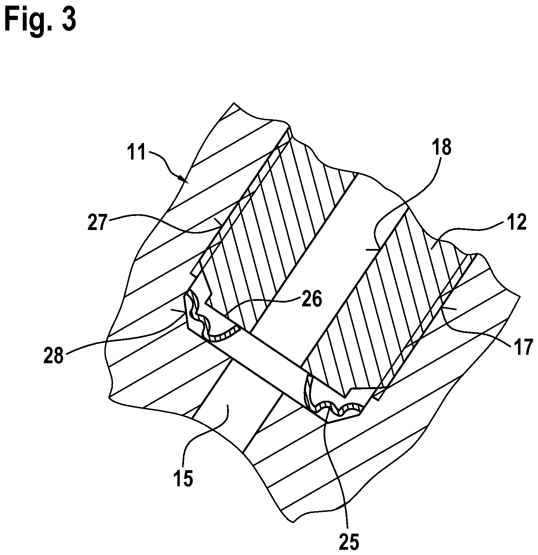

In der Fig. 2 ist der Druckstutzen 12 zu Beginn der Montage des Druckstutzens 12 in der Aufnahme 17 dargestellt. Insbesondere erkennt man, dass der äußere Bereich 33 der Dichtungsscheibe 29 an der Schräge 28 der Aufnahme 17 anliegt. Dadurch findet eine Selbstzentrierung der Dichtungsscheibe 29 zur Aufnahme 17 statt. Zwischen dem äußeren Bereich 33 der Dichtungsscheibe 29 und der Umfangswand 27 der Aufnahme 17 ist darüber hinaus ein radialer Spalt 37 ausgebildet. Bei der Montage des Druckstutzens 12 durch Einschrauben des Druckstutzens 12 in die Aufnahme 17 bewegt sich der Druckstutzen 12 in Richtung zum Grund 22 der Aufnahme 17. Dabei wird die Dichtungsscheibe 29 bereichsweise deformiert bzw. axial verpresst, derart, dass die Kuppen 36 mit einer gewünschten Anlage- bzw. Dichtkraft an den Oberflächen des Grunds 22 bzw. des Druckstutzens 12 anliegen. Weiterhin wird die Dichtungsscheibe 29 radial derart verformt, dass deren Durchmesser zunimmt. Dabei gelangt der äußere Bereich 33 der Dichtungsscheibe 29 zumindest bereichsweise in Anlagekontakt mit der Umfangswand 27 der Aufnahme 17 (Fig. 3). In dieser Position hat der Druckstutzen 12 seine axiale Endposition in der Aufnahme 17 erreicht. Dabei ist der Spalt 37 zwischen der Dichtungsscheibe 29 und der Umfangswand 27 der Aufnahme 17 zumindest bereichsweise auf Null reduziert.

Insbesondere kann es auch vorgesehen sein, dass die Dichtungsscheibe 29 nicht wellenförmige Abschnitte 35 aufweist, sondern derart geformt ist, dass sie im Querschnitt beispielsweise ein trapez- oder dreieckförmiges Profil aufweist. Wesentlich ist lediglich die Möglichkeit des axialen Verpressens der Dichtungsscheibe 29, wobei die angesprochenen Abschnitte sich unter Ausbildung von Dichtflächen deformiert werden.

## Patentansprüche

1. Kraftstoffzuleitungseinrichtung an einem Kraftstoffinjektor (10), die einen mit einem Injektorgehäuse (11) verbundenen Druckstutzen (12) umfasst, der eine in Längsrichtung des Druckstutzens (12) verlaufende, auf der Seite des Injektorgehäuses (11) im Bereich einer Stirnseite (26) des Druckstutzens (12) mündende Durchgangsbohrung (18) für Kraftstoff aufweist, die im Einbauzustand fluchtend zu einem im Injektorgehäuse (11) verlaufenden Versorgungskanal (15) angeordnet ist, wobei das Injektorgehäuse (11) eine sacklochförmige Aufnahme (17) für den dem Injektorgehäuse (11) zugewandten Endbereich des Druckstutzens (12) aufweist, und wobei der Druckstutzen (12) unter axialer Zwischenlage eines eine Durchgangsöffnung (30) für den Kraftstoff aufweisenden Dichtelements (25) gegen einen Grund (22) der Aufnahme (17) mit dem Injektorgehäuse (11) druckdicht verbunden ist, wobei das Dichtelement (25) als Dichtungsscheibe (29) mit einer in radialer Richtung gewellten Form ausgebildet ist,
**dadurch gekennzeichnet,**
**dass** zwischen dem Innendurchmesser der Aufnahme (17) und dem Außendurchmesser des Dichtelements (25) im Montagezustand ein radialer Spalt (37) ausgebildet ist, und dass im Einbauzustand des Druckstutzens (12) in der Aufnahme (17), bei der dieser seine axiale Endposition einnimmt, der radiale Spalt (37) zumindest bereichsweise Null ist.

2. Kraftstoffzuleitungseinrichtung nach Anspruch 1,
**dadurch gekennzeichnet,**
**dass** der Querschnitt der Dichtungsscheibe (29) mehrere wellenförmigen Abschnitte (35) und vorzugsweise zwei, in einer Symmetrieebene (32) der Dichtungsscheibe (29) angeordnete, radial innen und außen umlaufende, ebene Bereiche (33, 34) aufweist.

3. Kraftstoffzuleitungseinrichtung nach Anspruch 1 oder 2,
**dadurch gekennzeichnet,**
**dass** das Dichtelement (25) aus einem leicht deformierbaren Material, insbesondere aus Stahl, besteht.

4. Kraftstoffzuleitungseinrichtung nach einem der Ansprüche 1 bis 3,
**dadurch gekennzeichnet,**
**dass** der Grund (22) der Aufnahme (17) und die Stirnseite (26) des Druckstutzens (12), ggf. mit Ausnahme des jeweils radial äußeren Bereichs, eben ausgebildet sind.

5. Kraftstoffzuleitungseinrichtung nach Anspruch 4,
**dadurch gekennzeichnet,**
**dass** die Oberfläche des Grunds (22) der Aufnahme (17) und/oder die Stirnseite (26) des Druckstutzens (12) durch einen spanenden Fertigungsschritt, insbesondere durch Drehen, ausgebildet sind/ist.

6. Kraftstoffzuleitungseinrichtung nach einem der Ansprüche 1 bis 5,
**dadurch gekennzeichnet,**
**dass** der Grund (22) der Aufnahme (17) eine radial umlaufende Schräge (28) aufweist, dass das Dichtelement (25) im Montagezustand mit seinem Umfang an der Schräge (28) anliegt und dass im Einbauzustand des Druckstutzens (12) in der Aufnahme (17), bei der dieser seine axiale Endposition einnimmt, der Umfang des Dichtelements (25) an der Umfangswand (27) der Aufnahme (17) außerhalb der Schräge (28) zumindest bereichsweise anliegt.

7. Kraftstoffzuleitungseinrichtung nach einem der Ansprüche 1 bis 6,
**dadurch gekennzeichnet,**
**dass** die Verbindung zwischen dem Druckstutzen (12) und dem Injektorgehäuse (11) mittels einer Gewindeverbindung (20) erfolgt.

8. Kraftstoffzuleitungseinrichtung nach einem der Ansprüche 1 bis 7,
**dadurch gekennzeichnet,**
**dass** der Druckstutzen (12) und das Injektorgehäuse (11) an den Anlageflächen zu dem Dichtelement (25) aus einem gegenüber dem Material des Dichtelements (25) härteren Material bestehen.

9. Kraftstoffinjektor (10) mit einer Kraftstoffzuleitungseinrichtung nach einem der Ansprüche 1 bis 8.

## Claims

1. Fuel feed device on a fuel injector (10), which fuel feed device comprises a pressure connector (12) which is connected to an injector housing (11) and which has a passage bore (18) for fuel, which passage bore runs in a longitudinal direction of the pressure connector (12) and opens out, on the side of the injector housing (11), in the region of a face side (26) of the pressure connector (12) and, in the installed state, is arranged in alignment with a supply duct (15) which runs in the injector housing (11), wherein the injector housing (11) has a receptacle (17), formed in a manner of a blind bore, for that end region of the pressure connector (12) which faces toward the injector housing (11), and wherein the pressure connector (12) is connected in pressure-tight fashion to the injector housing (11) with the interposition of a sealing element (25), which has a passage opening (30) for the fuel, against a base (22) of the receptacle (17), wherein the sealing element (25) is formed as a seal disk (29) with an undulating form in a radial direction,
**characterized**
**in that**, in the assembled state, a radial gap (37) is formed between the inner diameter of the receptacle (17) and the outer diameter of the sealing element (25), and in that, in the installed state of the pressure connector (12) in the receptacle (17), in which said pressure connector assumes its axial end position, the radial gap (37) is zero at least in regions.

2. Fuel feed device according to Claim 1,
**characterized**
**in that** the cross section of the seal disk (29) has multiple undulating sections (35), and preferably two planar regions (33, 34) which are arranged in a plane of symmetry (32) of the seal disk (29) and which run in encircling fashion radially at the inside and radially at the outside.

3. Fuel feed device according to Claim 1 or 2,
**characterized**
**in that** the sealing element (25) is composed of an easily deformable material, in particular of steel.

4. Fuel feed device according to one of Claims 1 to 3,
**characterized**
**in that** the base (22) of the receptacle (17) and the face side (26) of the pressure connector (12) are of planar form, possibly with the exception of the respectively radially outer region.

5. Fuel feed device according to Claim 4,
**characterized**
**in that** the surface of the base (22) of the receptacle (17) and/or the face side (26) of the pressure connector (12) are/is formed by means of a cutting manufacturing step, in particular by means of turning.

6. Fuel feed device according to one of Claims 1 to 5,
**characterized**
**in that** the base (22) of the receptacle (17) has a radially encircling bevel (28), in that the sealing element (25), in the assembled state, bears with its circumference against the bevel (28), and in that, in the installed state of the pressure connector (12) in the receptacle (17), in which said pressure connector assumes its axial end position, the circumference of the sealing element (25) bears at least in regions against the circumferential wall (27) of the receptacle (17) outside the bevel (28).

7. Fuel feed device according to one of Claims 1 to 6,
**characterized**
**in that** the connection between the pressure connector (12) and the injector housing (11) is realized by means of a threaded connection (20).

8. Fuel feed device according to one of Claims 1 to 7,
**characterized**
**in that** the pressure connector (12) and the injector housing (11) are, at the contact surfaces-with respect to the sealing element (25), composed of a material which is harder than the material of the sealing element (25).

9. Fuel injector (10) having a fuel feed device according to one of Claims 1 to 8.

## Revendications

1. Dispositif d'alimentation en carburant pour un injecteur de carburant (10) qui comprend une tubulure de pression (12) connectée à un boîtier d'injecteur (11), laquelle présente un alésage de passage (18) pour du carburant s'étendant dans la direction longitudinale de la tubulure de pression (12), débouchant du côté du boîtier d'injecteur (11) dans la région d'un côté frontal (26) de la tubulure de pression (12), lequel alésage de passage est disposé, dans l'état monté, en affleurement avec un canal d'alimentation (15) s'étendant dans le boîtier d'injecteur (11), le boîtier d'injecteur (11) présentant un logement en forme de trou borgne (17) pour la région d'extrémité de la tubulure de pression (12) tournée vers le boîtier d'injecteur (11), et la tubulure de pression (12) étant connectée au boîtier d'injecteur (11) de manière étanche à la pression vis-à-vis d'un fond (22) du logement (17) avec interposition axiale d'un élément d'étanchéité (25) présentant une ouverture de passage (30) pour le carburant, l'élément d'étanchéité (25) étant réalisé sous forme de rondelle d'étanchéité (29) avec une forme ondulée dans la direction radiale,
**caractérisé en ce**
**qu'**une fente radiale (37) est réalisée entre le diamètre intérieur du logement (17) et le diamètre extérieur de l'élément d'étanchéité (25) dans l'état de montage et **en ce que** dans l'état de la tubulure de pression (12) montée dans le logement (17), dans lequel celle-ci adopte sa position d'extrémité axiale, la fente radiale (37) est au moins en partie inexistante.

2. Dispositif d'alimentation en carburant selon la revendication 1,
**caractérisé en ce que**
la section transversale de la rondelle d'étanchéité (29) présente plusieurs portions de forme ondulée (35) et de préférence deux régions planes (33, 34) disposées dans un plan de symétrie (32) de la rondelle d'étanchéité (29), s'étendant radialement à l'intérieur et à l'extérieur sur la périphérie.

3. Dispositif d'alimentation en carburant selon la revendication 1 ou 2,
**caractérisé en ce que**
l'élément d'étanchéité (25) se compose d'un matériau facilement déformable, en particulier d'acier.

4. Dispositif d'alimentation en carburant selon l'une quelconque des revendications 1 à 3,
**caractérisé en ce que**
la base (22) du logement (17) et le côté frontal (26) de la tubulure de pression (12) sont réalisés sous forme plane, éventuellement à l'exception de la région radialement extérieure respective.

5. Dispositif d'alimentation en carburant selon la revendication 4,
**caractérisé en ce que** la surface de la base (22) du logement (17) et/ou le côté frontal (26) de la tubulure de pression (12) est/sont réalisés par une étape de fabrication par enlèvement de copeaux, en particulier par tournage.

6. Dispositif d'alimentation en carburant selon l'une quelconque des revendications 1 à 5,
**caractérisé en ce que**
la base (22) du logement (17) présente un biseau (28) s'étendant radialement sur la périphérie, **en ce que** l'élément d'étanchéité (25), dans l'état de montage, s'applique avec sa périphérie contre le biseau (28) et **en ce que** dans l'état de la tubulure de pression (12) installée dans le logement (17), dans lequel ladite tubulure de pression adopte sa position de fin de course axiale, la périphérie de l'élément d'étanchéité (25) s'applique au moins en partie contre la paroi périphérique (27) du logement (17) à l'extérieur du biseau (28).

7. Dispositif d'alimentation en carburant selon l'une quelconque des revendications 1 à 6,
**caractérisé en ce que**
la connexion entre la tubulure de pression (12) et le boîtier d'injecteur (11) s'effectue au moyen d'une connexion filetée (20).

8. Dispositif d'alimentation en carburant selon l'une quelconque des revendications 1 à 7,
**caractérisé en ce que**
la tubulure de pression (12) et le boîtier d'injecteur (11), au niveau des surfaces d'appui contre l'élément d'étanchéité (25), se composent d'un matériau plus dur par rapport au matériau de l'élément d'étanchéité (25).

9. Injecteur de carburant (10) comprenant un dispositif d'alimentation en carburant selon l'une quelconque des revendications 1 à 8.
